# FASCICULE DE BREVET EUROPEEN

(11) **EP 2 231 783 B1**
(45) Date de publication et mention de la délivrance du brevet: **03.10.2018**
(21) Numéro de dépôt: 08761777.5
(22) Date de dépôt: 17.01.2008
(51) Int. Cl.: C09B 67/00, C09D 5/03, C09D 17/00

(54) **POUDRE POUR COMPOSITION DE PEINTURE LIQUIDE**
PULVER FÜR FLÜSSIGLACKZUSAMMENSETZUNG
POWDER FOR LIQUID PAINT COMPOSITION

(43) Date de publication de la demande: 29.09.2010
(73) Titulaire: Orgacolor, 59541 Caudry (FR); S.A. Color, 76380 Canteleu (FR)
(72) Inventeur: SITAR, Christophe, F-59400 Cambrai (FR); GIBON, Xavier, F-59440 Dourlers (FR); BOUDIN, Michel, F-76480 Ambourville (FR); JOSSE, Denis, F-76760 Yerville (FR)
(74) Mandataire: Gendron, Vincent Christian
(86) Numéro de dépôt international: PCT/FR2008/000058
(87) Numéro de publication internationale: WO 2009/090315

(56) Documents cités:
- WO-A-2004/096922
- FR-A- 2 826 369
- FR-A- 2 903 400
- DATABASE WPI Week 197932 Thomson Scientific, London, GB; AN 1979-58736B XP002499905 & JP 54 080332 A (DAINI SEIKOSHA KK) 27 juin 1979 (1979-06-27)

## Description

La présente invention se situe dans le domaine des peintures, et plus particulièrement des compositions de peinture liquides applicables au pinceau.

On entend par peinture aussi bien les peintures proprement dites, que les vernis, lasures, et autres compositions sous forme liquide destinées à être appliquées en couche mince sur une surface à recouvrir, sous forme de film durcissable sous l'effet de l'évaporation du solvant.

Le terme liquide s'étend également aux formes de crèmes, obtenues par ajout d'un épaississant dans la composition liquide.

Les compositions de peinture destinées à être appliquées au pinceau contiennent typiquement un ou plusieurs pigments choisis pour leur pouvoir colorant, une ou plusieurs résines à propriétés filmogènes, c'est-à-dire aptes à former un film durcissant lors du séchage par évaporation du solvant, et diverses charges et autres additifs. Elles sont habituellement présentées et commercialisées sous forme liquide. Une telle forme de présentation a notamment les inconvénients d'un volume et d'un poids importants des pots contenant la peinture, ce qui occasionne des frais élevés pour les opérations de transport et le stockage de ces pots. De plus, ces compositions comportent des composés organiques volatils et des fongicides, nocifs pour l'environnement.

Il est connu de proposer des compositions solides à mettre au contact de l'eau. Par exemple la demande de brevet WO2004/096922 décrit une composition solide colorante, sous forme d'un concentré de pigments, qui se désintègre au contact de l'eau pour colorer un matériau, notamment du ciment ou une base liquide de peinture. La demande de brevet FR2903400 décrit aussi une composition solide d'enduit constituée d'ingrédients simplement compactés ensemble sous forme de pastille, destinée à être mise en contact avec de l'eau. Toutefois aucune de ces compositions n'apparaît apte à fabriquer une peinture liquide formant après application un film durcissable sous l'effet de l'évaporation du solvant.

L'invention vise à remédier aux inconvénients des compositions de peinture liquides existantes, et notamment à ceux énoncés ci avant, en proposant une solution économique au problème du transport, du stockage et de la stabilité en pots des compositions de peinture applicables au pinceau.

A cet effet, l'invention propose une poudre pour composition de peinture liquide, constituée comme il est défini à la revendication 1. Elle comporte des grains de pigments en mélange avec un agent dispersant dans un liant, et une résine à propriétés filmogènes, et qui est présentée sous une forme à dissoudre dans une quantité d'eau déterminée de manière à obtenir une composition de peinture liquide colorante filmogène prête à l'emploi.

La poudre selon l'invention se présente avantageusement sous forme d'un mélange pulvérulent de poudres non poussiéreuses, présentant une granulométrie moyenne supérieure à 10 microns, de préférence comprise entre 100 et 800 µm, mais pouvant aller jusqu'à 1 à 2 mm. Une granulométrie inférieure à 1 mm est cependant généralement préférée, pour une plus grande rapidité de dissolution dans l'eau. La poudre selon l'invention se présente de préférence sous forme de granulés ne contenant pas de poussières.

Elle est avantageusement présentée, sous sa forme commerciale, prête à être dissoute dans l'eau, avec les préconisations associées quant à ses conditions de dissolution, en terme de quantité d'eau par rapport à la quantité de poudre. Elle permet avantageusement, par sa seule simple dissolution dans de l'eau en quantité adéquate, d'obtenir une composition de peinture liquide, et ce sans qu'il soit nécessaire d'ajouter le moindre constituant supplémentaire. La résine filmogène qu'elle contient y est en quantité appropriée pour assurer en elle-même, lors du séchage après application sur un support, la formation d'un film durcissant au fur et à mesure de l'évaporation de l'eau.

Après dissolution, qui est effectuée par l'utilisateur final au moment de réaliser les travaux de peinture, on obtient ainsi directement une composition de peinture liquide, colorante et filmogène, qui est prête à l'emploi. Cette composition est applicable, sous forme de film durcissable, au pinceau ou par tout autre moyen similaire, tel que le rouleau, le pistolet, ou autre.

Le liant tel que défini selon l'invention a essentiellement pour fonction de former des granulés contenant les pigments et l'agent dispersant en enrobant ceux-ci. On obtient par son utilisation une granulométrie suffisamment importante pour assurer un bon confort d'utilisation pour l'utilisateur, en évitant la présence de poussières salissantes et susceptibles d'être inhalées. Il est choisi pour être soluble dans l'eau, de manière à se dissoudre dans ce véhicule et à libérer les constituants qu'il enrobe, en particulier les pigments et l'agent dispersant, pour leur permettre d'assurer leurs fonctions respectives dans la composition liquide. Dans des modes de réalisation préférés de l'invention, le liant joue également un rôle pour faciliter la dissolution de la poudre dans l'eau et sa stabilité en phase liquide.

L'agent dispersant permet quant à lui de former une dispersion stable des constituants de la poudre qui ne sont pas solubles dans l'eau, notamment des pigments, par un phénomène spontané, c'est-à-dire sans action extérieure.

De façon tout à fait avantageuse, selon l'invention, les seuls pots à transporter et à stocker sur les lieux de vente sont ceux contenant le mélange en poudre. L'utilisateur final achète ces pots et il réalise lui-même l'opération finale, qui est la dissolution du mélange dans une quantité d'eau appropriée, directement sur le lieu où les travaux de peinture doivent être réalisés. On diminue ainsi avantageusement les coûts liés au transport et au stockage des pots de peinture, car le volume de la poudre seule, de même que son poids, sont nettement moins importants que ceux des peintures classiques sous forme liquide, pour une même capacité de surface peinte.

En outre, le mélange selon l'invention est particulièrement avantageux du point de vue économique, puisque l'utilisateur final a la possibilité de ne dissoudre dans l'eau que la quantité de poudre dont il a ponctuellement besoin, le reste de poudre pouvant être conservé dans le pot jusqu'à l'utilisation suivante. On élimine par conséquent les problèmes de gaspillage des peintures liquides qui sèchent au fond des pots. De plus, lors d'une utilisation ultérieure, on est assuré d'obtenir une coloration identique, en respectant les mêmes proportions relatives de poudre et de véhicule aqueux.

La dissolution est effectuée dans de l'eau, qui constitue le solvant de la peinture. Le liant, la résine filmogène et l'agent dispersant sont choisis pour être solubles dans le véhicule aqueux. On englobe ici, sous le terme solubles, tous les composés qui se dispersent dans le véhicule sous forme de particules ultra-fines, qui ne sont pas visibles à l'oeil. Ainsi, le terme dissolution utilisé dans toute la présente description englobe également la pseudo-dissolution, c'est-à-dire le cas où la dissolution n'est qu'apparente, des particules de dimension micronique se trouvant en suspension dans le véhicule.

Les pigments utilisables dans le cadre de l'invention sont avantageusement de tous types : organiques, tels que le bleu de phtalocyanine, le vert de phtalocyanine, le rouge de diketo-pyrrolo-pyrrole, le rouge naphtol, les jaunes azoïques, les pigments dérivés de l'isoindoline, du benzimidazolone, etc. , ou minéraux, tels que le dioxyde de titane, les oxydes de fer (opaques ou transparents), l'oxyde de chrome, le bleu de cobalt, le vanadate de bismuth, etc. Ces pigments peuvent être utilisés seuls ou en mélange, ce qui s'avère tout à fait avantageux du point de vue de la palette de couleurs pouvant être obtenue dans le cadre de l'invention. Ils se présentent initialement, de façon classique, sous forme d'une poudre de granulométrie ultrafine, de l'ordre de quelques dizaines de microns. Les pigments ont la caractéristique d'être insolubles dans l'eau, si bien qu'ils sont dispersés dans ce véhicule pour obtenir la composition de peinture liquide.

Suivant l'invention, la préparation de la composition de peinture liquide est avantageusement simple à mettre en oeuvre, puisqu'il suffit à l'utilisateur, pour seule opération de préparation, d'incorporer, c'est-à-dire tout simplement de verser, la quantité de poudre souhaitée dans le volume d'eau approprié, ou le contraire. Aucune autre opération supplémentaire n'est nécessaire. Les constituants du mélange pulvérulent se dissolvent alors dans l'eau. Une dispersion homogène des constituants pseudo-solubles, notamment des pigments, dans la solution est assurée par l'agent dispersant. Elle s'effectue d'elle-même. Un simple mélange par des moyens mécaniques usuels, tels qu'un bâton ou un agitateur branché sur une perceuse, finalise l'homogénéisation du mélange. On obtient ainsi directement une composition de peinture liquide homogène prête à l'emploi, présentant toutes les caractéristiques nécessaires à son utilisation, c'est-à-dire en particulier pouvoir colorant et capacité filmogène.

De plus, la composition de peinture liquide pouvant être préparée extemporanément à partir de la poudre selon l'invention, il n'est pas nécessaire d'y inclure des agents fongicides pour assurer sa conservation, contrairement aux peintures liquides classiques. La poudre selon l'invention présente l'avantage d'une bonne conservation dans le temps.

Suivant une caractéristique avantageuse de l'invention, les pigments et l'agent dispersant sont présentés sous forme des grains de poudre les contenant en mélange dans le liant, dans lequel ils ont été incorporés suivant la technique de granulation à l'état fondu, c'est-à-dire dans lequel ils ont été préalablement incorporés à sec (sous forme pulvérulente, en l'absence d'eau ou d'autres solvants), et dissous à une température supérieure à la température de fusion du liant. On obtient, après refroidissement, des granulés solides contenant les particules de pigment et l'agent dispersant en mélange homogène dans le liant, chacune de ces particules étant individuellement enrobée dans la masse de liant.

Le liant est de préférence choisi pour présenter une température de fusion relativement basse, notamment inférieure à 120°C, de préférence comprise entre 40°C et 80°C.

Un tel mode de préparation des pigments sous forme de granulés obtenus à l'état fondu permet d'obtenir, de façon tout à fait inattendue, après dissolution de la poudre (notamment de la masse de liant enrobant les particules) dans le véhicule aqueux, une dispersion des pigments qui est non seulement homogène, mais également stable dans le temps.

Des granulés peuvent être obtenus de toutes formes et toutes granulométries. Dans la pratique, on préfère utiliser des granulés de forme sphérique ou nodulaire par exemple, faciles à manipuler et présentant une vitesse de dissolution dans l'eau élevée, et d'une granulométrie comprise entre 100 et 800 microns, de telle sorte qu'il ne se produit pas de dégagement de poussières microniques lors de leur manipulation.

Il est en outre avantageux dans le cadre de l'invention que tous les constituants du mélange pulvérulent présentent une granulométrie du même ordre de grandeur.

La résine à propriétés filmogènes est présente également sous forme de poudre, sous forme d'un seul constituant ou d'un mélange de plusieurs constituants.

De façon avantageuse, une grande diversité de types de résine filmogène compatibles à l'eau peuvent être utilisés dans le cadre de l'invention. On préfère les résines du type à capacité filmogène par simple évaporation du solvant (l'eau selon l'invention) par séchage à l'air libre à la température ambiante (soit comprise entre 1 et 40°C), c'est-à-dire qui ne nécessitent, pour obtenir l'effet filmogène, la présence d'aucun catalyseur, notamment agent de réticulation, ou d'aucun co-réactif, ni même de chauffage pour le durcissement du film. La température de formation du film de la résine n'est pas limitative de l'invention, et il est possible d'utiliser des résines à température de formation du film inférieure à 10°C.

On peut citer par exemple les résines de type vinylique (esters vinyliques tels que résines d'acétate de vinyle ou résines de versatate de vinyle), les résines dérivées du polyéthylène (résines de polyéthylène, polyéthylène chloré ou chlorosulfoné), les résines dérivées du styrène (polystyrène, styrène-butadiène et dispersions, résines acryliques de styrène-butadiène), les résines dérivées du caoutchouc (isomérisé ou cyclisé, chloré), les résines vinyliques chlorées (chlorure de polyvinyle et autres copolymères, chlorure de vinylidène, résines vinyliques polyfluorées, acétate de polyvinyle, propionate de polyvinyle), les alcools polyvinyliques et leurs dérivés, les acétals polyvinyliques, les butyrals, les résines acryliques et les dispersions acryliques (acrylates et méthacrylates thermoplastiques), les silanes, les polyisocyanates, les résines dérivant de la houille ou du pétrole (coumarone-indène, résines d'hydrocarbures), les liants minéraux et hydrauliques tels que le ciment, la fleur de chaux, la caséine, etc.

L'utilisation de liants minéraux tel que la fleur de chaux, en combinaison avec une résine organique, notamment du type polymère à haut poids moléculaire issu de la condensation d'alcools et d'esters insaturés, est particulièrement préféré dans le cadre de l'invention, car elle évite la redissolution du film par l'eau issue de la pluie.

Dans les cas où la résine filmogène est pseudo-soluble dans l'eau, l'agent dispersant est avantageusement prévu dans la poudre en quantité suffisante pour assurer sa dispersion en phase liquide.

Les compositions de peinture obtenues avec le mélange en poudre selon l'invention sont avantageusement utilisables sur tous types de matériaux, qu'il s'agisse de bois, métal, matériaux de construction.... Elles permettent d'obtenir plusieurs niveaux de brillance (mat, satin ou brillant).

Suivant des modes de réalisation préférés dans la pratique industrielle, l'invention répond en outre aux caractéristiques suivantes, mises en oeuvre séparément ou en chacune de leurs combinaisons techniquement opérantes.

Dans des modes de réalisation préférés de l'invention, les pigments sont présents dans le mélange dans une concentration comprise entre 0,5 et 25 % en poids, de préférence comprise entre 7 et 15 % en poids, du poids total du mélange, en fonction du pouvoir couvrant, de la teinte, de la résistance aux ultra-violets, et de la qualité de peinture désirés.

La résine filmogène est présente dans une concentration comprise entre 1 et 60 % en poids du poids total du mélange, en fonction du brillant, de la qualité de la peinture et des performances de la résine recherchés.

De telles proportions, en liaison avec la quantité d'eau à associer à une quantité déterminée du mélange, permettent avantageusement d'obtenir une composition liquide prête à l'emploi par simple mélange de la poudre selon l'invention avec l'eau, et présentant un pouvoir colorant et des propriétés filmogènes adéquates pour l'utilisation en tant que peinture applicable au pinceau sur la surface souhaitée.

Suivant une caractéristique avantageuse de l'invention, l'agent dispersant est un agent effervescent, qui produit son effet au contact de l'eau, lorsque les granulés le contenant en mélange avec les pigments dans le liant se dissolvent. Il crée dans la solution une agitation qui assure la dispersion des particules de pigment et des autres constituants de la poudre dans le véhicule, en favorisant l'éclatement des grains en poudre ultra-fine. L'efficacité de cette dispersion est d'autant plus importante que l'agent effervescent est présent dans les granulés en mélange intime avec les pigments dans le liant.

L'utilisation d'un agent effervescent pour assurer la dispersion des particules de pigment dans la solution s'avère particulièrement avantageuse du point de vue de la qualité de la coloration de la composition de peinture. En effet, d'une part, l'agent effervescent assure une dispersion suffisante pour éviter le besoin de recourir en plus à des moyens de dispersion industriels, qui auraient pour effet d'endommager les pigments. La poudre selon l'invention est auto-dispersible. D'autre part, l'effervescence créée dans la solution casse les agglomérats de particules de pigment, et sépare ces dernières les unes des autres, ce qui a pour effet de révéler la teinte des pigments. La composition de peinture ainsi obtenue présente de ce fait une coloration de haute qualité.

Une telle technologie de préparation permet d'accélérer la dispersion des constituants dans le véhicule aqueux, de la stabiliser dans le temps, de réguler son pH.

Elle facilite en outre, lors de la fabrication de la poudre, le processus de granulation à sec : les granulats obtenus sont de meilleure qualité. En effet, dans le cadre de son utilisation en combinaison avec le procédé de granulation à l'état fondu, l'agent effervescent offre un avantage supplémentaire qui est de favoriser la granulation. Les granulés obtenus lorsque l'agent effervescent est présent dans le mélange sont de meilleure qualité, dans le sens où ils contiennent une teneur en poussières moins élevée. Ce résultat avantageux pourrait être expliqué par le fait que, en raison de la présence de traces d'eau dans le mélange lors de la mise en oeuvre du procédé, il se produit dans ce mélange une légère effervescence qui a pour effet de favoriser la granulation.

L'agent effervescent est en pratique un mélange de deux composés qui sont finement distribués individuellement dans le liant, de manière à ne réagir l'un avec l'autre qu'en présence d'eau. Il s'agit notamment d'un mélange de carbonate de soude et d'acide citrique, dans des proportions sensiblement stoechiométriques. Cette combinaison particulière s'avère avantageuse du point de vue de la stabilité de la composition liquide obtenue, puisque la réaction entre le carbonate de soude et l'acide citrique produit du citrate de sodium, qui a la propriété de stabiliser les produits en solution.

L'agent effervescent est de préférence présent dans le mélange dans une concentration comprise entre 2 et 20 % en poids, de préférence comprise entre 8 et 15 % en poids, par rapport au poids total du mélange. Cette concentration permet avantageusement d'assurer une dispersion homogène, rapide et complète des pigments dans le véhicule aqueux dès la dissolution du liant les enrobant.

L'agent dispersant peut également, dans le cadre de l'invention, être un agent tensioactif, ou toute autre substance favorisant la dispersion de particules solides de taille micronique dans une solution.

Dans des modes de réalisation préférés de l'invention, le liant utilisé pour enrober les particules de pigment et l'agent dispersant présente des propriétés tensioactives, si bien qu'il participe à l'effet de dispersion des particules de pigment dans le véhicule aqueux, en empêchant la réagglomération des particules désagglomérées par l'agent dispersant. On obtient de ce fait avantageusement, en liaison avec la présence de l'agent dispersant, une dispersion des constituants, notamment des pigments, dans l'eau qui est rapide, homogène, et qui reste stable dans le temps.

Le liant consiste en un mélange d'alcool gras éthoxylé et de polyéthylène glycol (PEG).

L'alcool gras éthoxylé est de préférence un éther alkylé de polyéthylèneglycol d'alcool gras, qui est de préférence présent dans une proportion d'environ 50 % en poids par rapport au poids total dudit liant.

Dans des modes de réalisation préférés de l'invention, le liant est présent dans une proportion comprise entre 5 et 30 % en poids, de préférence comprise entre 5 et 10 % en poids, du poids total du mélange. Cette quantité est suffisante pour permettre un enrobage complet de tous les constituants du mélange.

Dans des modes de réalisation préférés de l'invention, les pigments et la résine filmogène sont présents dans les mêmes grains de poudre, en mélange dans le liant dans lequel ils ont préalablement été dissous à une température supérieure à la température de fusion du liant. Le mélange selon l'invention se présente ainsi avantageusement sous forme d'une poudre unique, dans laquelle tous les constituants, pigments, agent dispersant et résine, sont enrobés dans les mêmes grains formés par le liant. Il en résulte une grande facilité d'utilisation, puisque le mélange est alors homogène, et qu'on évite tout risque de décantation dans le pot de certaines poudres par rapport à d'autres. Ce mode de réalisation est le plus avantageux du point de vue de la reproductibilité de la coloration obtenue à partir d'un même pot. Il est notamment préféré pour les peintures de haute qualité, car il permet d'obtenir une bonne uniformité du film durci formé, ce dernier présentant en outre alors une bonne résistance mécanique et chimique.

Dans d'autres modes de réalisation de l'invention, les pigments et la résine sont présents dans des grains de poudre différents. Dans ce cas, qui est le plus simple du point de vue de la fabrication industrielle, les pigments sous forme auto-dispersible, par exemple préparés selon le principe de la granulation à l'état fondu, et la résine, sont simplement mélangés, sous forme de poudres distinctes.

Il est également possible dans le cadre de l'invention que la résine filmogène soit présente à la fois dans les grains formés de pigments enrobés dans le liant, et dans des grains qui en sont distincts.

Le mélange peut également contenir des charges et additifs sous forme de poudre utilisés de façon classique pour des compositions de peinture, et qui peuvent être présents soit dans les grains de liant, soit sous forme de poudres distinctes dans le mélange, soit les deux. Les charges sont présentes dans le mélange en quantité suffisante pour compléter le mélange en % en poids, en fonction de la quantité utilisée des autres constituants.

Suivant une caractéristique avantageuse de l'invention, la poudre comporte par exemple, seules ou en association avec des pigments de couleur, des particules de titane, pigment blanc, qui permettent d'obtenir la nuance de couleur désirée, dans une proportion de 0 à 25 % en poids par rapport au poids total du mélange.

Dans des modes de réalisation préférés de l'invention, le mélange comporte en outre des additifs qui sont classiques en eux-mêmes. Il peut s'agir notamment de durcisseurs, agents ignifugeants, épaississants (tels que l'éther de cellulose, l'argile, la gomme xanthane), liants hydrauliques (tels que la fleur de chaux), catalyseurs, agents de résistance à l'abrasion, régulateurs de pH, et/ou agents anti-mousse (tels que le polysiloxane).

Les agents anti-mousse ont notamment un effet tout à fait avantageux lorsqu'ils sont utilisés dans les modes de réalisation de l'invention dans lesquels l'agent dispersant est un agent effervescent, qui est susceptible d'induire la formation de mousse dans la solution. Le mélange peut également comporter des agents de surface, des pigments à action anti-corrosion, des agents fongicides, des agents anti-bactériens, des agents anti-acariens, des agents hydrofuges, et autres additifs classiques (agents rhéologiques, billes de verre creuses, agents de surface, etc).

Le mélange selon l'invention peut également contenir des charges classiques en elles-mêmes, telles que du carbonate de calcium, du talc, du sulfate de baryum, du mica, etc.

La composition selon l'invention, sous forme de poudre, ne contient pas de solvant organique. Elle ne contient avantageusement pas non plus d'agent fongicide nécessaire à la conservation des peintures liquides en pot. Elle répond par conséquent aux nouvelles directives européennes sur les COV (pour Composés organiques Volatils), définis comme les solvants de point d'ébullition inférieur à 250°C à la pression atmosphérique, et sur le fongicides, puisqu'elle ne contient aucun de ces composés.

Dans des modes de réalisation préférés de l'invention, le mélange est présenté sous une forme permettant l'obtention d'une composition de peinture liquide colorante filmogène applicable au pinceau par dilution de 1 à 2 parts du mélange de poudre dans 1 à 2 parts d'eau, notamment de 50 g du mélange de poudre dans 50 ml d'eau.

Il est notamment présenté dans un bidon, ou autre conteneur, renfermant une certaine quantité de poudre et incluant un volume libre suffisant pour qu'il puisse y être ajouté, extemporanément, le volume d'eau adéquat pour permettre l'obtention d'une composition de peinture liquide présentant les propriétés désirées. Ce volume adéquat peut notamment être indiqué par un trait de jauge disposé sur une paroi transparente du bidon.

Dans des modes de réalisation préférés de l'invention, la poudre selon l'invention comporte 0,5 à 30% en poids de granulés obtenus par granulation à l'état fondu de pigments et d'agent dispersant dans le liant (dans lesquels les pigments sont présents à raison de 50 à 85% en poids du poids total des granulés), 1 à 60% en poids de grains de résine filmogène (notamment 1 à 5% en poids pour les peintures basse qualité ou du type lasure, et 20 à 60 % en poids pour les peintures haute qualité) ; et le complément en grains de charges et additifs.

Cette poudre est adaptée pour être dissoute à raison de 20 à 80 parts de poudre dans 20 à 80 parts d'eau. La composition liquide obtenue par cette dissolution est directement applicable au pinceau sous forme de film durcissable.

Ainsi, un procédé d'utilisation de la poudre selon l'invention comprend uniquement les étapes suivantes : on incorpore une quantité de poudre dans une quantité d'eau déterminée adéquate, de manière à obtenir une composition de peinture liquide colorante filmogène prête à l'emploi. Cette opération est réalisée par une simple mise en contact de la poudre et de l'eau. Les grains de poudre se dissolvent dans l'eau. Il se produit une dispersion spontanée, ou auto-dispersion, des pigments et des autres constituants pseudo-solubles dans l'eau. Aucun constituant supplémentaire n'est ajouté. On mélange éventuellement avec des moyens mécaniques usuels. Après quelques minutes la dissolution/dispersion des constituants s'est effectuée et la composition est prête à l'emploi.

On applique ensuite la composition liquide ainsi obtenue sur une surface à peindre au moyen d'un pinceau, d'un rouleau, au pistolet, ou par tout autre moyen similaire. On laisse simplement sécher à l'air libre à la température ambiante, pour obtenir le durcissement du film sur la surface enduite.

Ce procédé est avantageusement tout à fait simple à mettre en oeuvre, à partir des seuls composants que sont la poudre selon l'invention, et l'eau.

Le mélange selon l'invention offre les avantages suivants : il ne contient pas de COV ; il ne nécessite pas d'agent fongicide nécessaire à la protection de la peinture en pot ; il ne contient pas de poussières ; il ne s'y produit pas le risque de séchage de la peinture liquide lors du stockage ; il ne s'y produit pas de sédimentation comme pour la peinture liquide lors du stockage ; il ne craint pas le gel lors du stockage ; il représente moins de poids à transporter ; il prend moins de place sur les linéaires de stockage ; il est facile à manipuler.

L'invention sera maintenant plus avant précisée dans ses caractéristiques préférées et ses résultats avantageux, par la description détaillée de modes de mise en oeuvre particuliers qui font l'objet des exemples ci-après. Sauf stipulation contraire, toutes les grandeurs chiffrées ou autres indications seront exprimées en conformité avec la normalisation internationale d'une part, en quantités massiques d'autre part.

### Exemples 1 à 8

On fabrique, par un procédé de granulation à l'état fondu, des granulés pour compositions de peinture de la façon suivante.

On effectue le mélange à sec des composés donnés dans le tableau 1, les proportions étant exprimées en % en poids par rapport au poids total du mélange.

Les pigments y sont définis de façon classique, suivant leur code Color Index.

**Tableau 1 : composition des granulés des Exemples 1 à 8**

| Composé | Ex. 1 | Ex. 2 | Ex. 3 | Ex. 4 | Ex. 5 | Ex. 6 | Ex. 7 | Ex. 8 |
|---|---|---|---|---|---|---|---|---|
| Bleu de phtalocyanine | 3 % | - | - | - | - | - | - | - |
| Pigment Rouge 254 | - | 3 % | - | - | - | - | - | - |
| Vanadate de bismuth | - | - | 3 % | - | - | - | - | - |
| Oxyde de fer jaune | - | - | - | 3 % | - | - | - | - |
| Oxyde de chrome vert | - | - | - | - | 3 % | - | - | - |
| Pigment yellow 74 | - | - | - | - | - | 3 % | - | - |
| Pigment violet 23 | - | - | - | - | - | - | 3 % | - |
| Dioxyde de titane (blanc) | 5 % | 5 % | 5 % | 5 % | 5 % | 5 % | 5 % | 5 % |
| Mélange d'éther alkylé de PEG d'alcool gras | 7,5 % | 7,5 % | 7,5 % | 7,5 % | 7,5 % | 7,5 % | 7,5 % | 7,5 % |
| Résine copolymère d'acrylate | 27,25 % | 27,25 % | 27,25 % | 27,25 % | 27,25 % | 27,25 % | 27,25 % | 27,25 % |
| Copolymère d'acétate de vinyle et de versatate de vinyle | 18,15 % | 18,15 % | 18,15 % | 18,15 % | 18,15 % | 18,15 % | 18,15 % | 18,15 % |
| Carbonate de calcium | 22,5 % | 22,5 % | 22,5 % | 22,5 % | 22,5 % | 22,5 % | 22,5 % | 22,5 % |
| Ether de cellulose | 0,4 % | 0,4 % | 0,4 % | 0,4 % | 0,4 % | 0,4 % | 0 ,4 % | 0,4 % |
| Fleur de chaux | 0,9 % | 0,9 % | 0,9 % | 0,9 % | 0,9 % | 0,9 % | 0,9 % | 0,9 % |
| Anti-mousse : polysiloxane | 0,25 % | 0,25 % | 0,25 % | 0,25 % | 0,25 % | 0,25 % | 0,25 % | 0,25 % |
| Carbonate de soude | 8 % | 8 % | 8 % | 8 % | 8 % | 8 % | 8 % | 8 % |
| Acide citrique | 7 % | 7 % | 7 % | 7 % | 7 % | 7 % | 7 % | 7 % |

Le mélange sec est chauffé au bain-marie, à une température d'environ 100 °C, supérieure à la température de fusion du liant (Ether alkylé de PEG d'alcool gras), jusqu'à ce que le liant soit complètement liquide. Il est ensuite refroidi de manière à assurer sa précipitation sous forme de granulés solides, de granulométrie moyenne comprise entre 100 µm et 1 mm, qui sont recueillis et maintenus sous agitation modérée jusqu'à complet refroidissement, afin d'éviter leur agglomération en blocs.

On obtient des poudres formées chacune d'un seul type de granulés enfermant tous les constituants du mélange.

### Exemples 9 à 12

On procède comme pour les exemples 1 à 8, pour préparer des granulés à partir des constituants donnés dans le tableau 2 ci-après.

**Tableau 2 : composition des granulés des Exemples 9 à 12**

| Composé | Ex. 9 | Ex. 10 | Ex. 11 | Ex. 12 |
|---|---|---|---|---|
| Bleu de phtalocyanine | 45 % | - | - | 22% |
| Pigment rouge 254 | - | 46 % | - | 20% |
| Oxyde de fer jaune | - | - | 49 % | - |
| Dioxyde de titane (blanc) | 5 % | 4 % | 1 % | 8 % |
| Mélange d'éther alkylé de PEG d'alcool gras | 20 % | 20 % | 20 % | 20 % |
| Carbonate de soude | 16 % | 16 % | 16 % | 16 % |
| Acide citrique | 14 % | 14 % | 14 % | 14 % |

Les granulés obtenus sont mélangés à sec de façon homogène, par des moyens mécaniques, avec les composés suivants présentés sous forme de poudres distinctes :

| | |
|---|---|
| Granulés des Exemples 9 à 12 | 5 % |
| Résine copolymère d'acrylate | 32,76 % |
| Copolymère d'acétate de vinyle et de versatate de vinyle | 19,24 % |
| Ether de cellulose | 1 % |
| Carbonate de calcium | 37 % |
| Fleur de chaux | 1 % |
| Acide citrique | 4 % |

On obtient des mélanges pulvérulents. Leur granulométrie moyenne est supérieure à 100 µm.

### Exemple 13

On verse respectivement une quantité de 50 g des granulés de chacun des Exemples 1 à 8 dans un volume de 50 ml d'eau.

Pour tous les cas, on observe que les granulés se dissolvent immédiatement. Il se produit dans les solutions une légère effervescence, avec une légère formation de mousse. Dans le même temps, les solutions se colorent de façon homogène.

Au bout d'environ 10 minutes, la mousse a disparu. Les solutions sont d'apparence limpide et elles présentent une couleur homogène. Les particules de pigments sont finement dispersées.

Dans les huit solutions, la dispersion des pigments reste stable dans le temps. Elle se maintient sans qu'il soit nécessaire d'agiter pendant plusieurs heures (jusqu'à 12 heures).

Les compositions liquides obtenues présentent un pouvoir colorant et une capacité filmogène adéquats pour être utilisées en tant que peintures applicables au pinceau.

### Exemple 14

On procède de la même manière que dans l'Exemple 13, avec les compositions pulvérulentes des Exemples 9 à 12.

On obtient, pour les quatre solutions, une dispersion homogène des pigments et des différents autres constituants. Cette dispersion reste stable dans le temps. Elle se maintient sans qu'il soit nécessaire d'agiter pendant plusieurs heures.

Les compositions liquides obtenues possèdent un pouvoir colorant et une capacité filmogène adéquats pour être utilisées en tant que peintures.

### Exemple 15

Les compositions liquides obtenues selon les Exemples 13 et 14 sont utilisées de la façon suivante.

Chaque composition est appliquée au pinceau, en fine couche d'épaisseur d'environ 100 µm, sur des plaques de plâtre, de bois, de métal et de papier verni.

Les plaques sont laissées à sécher à l'air libre, à des températures comprises entre 1 et 40°C, pendant environ 5 à 60 minutes suivant la température.

Pour chaque composition, on observe, lors de l'évaporation de l'eau, la formation d'un film de peinture coloré d'apparence normale, d'épaisseur environ 50 µm, et présentant une couleur homogène.

## Revendications

1. Constituant de peinture pulvérulent se dissolvant dans l'eau pour obtenir une peinture liquide prête à l'emploi, formée de grains de poudre contenant des pigments enrobés en mélange avec un agent dispersant dans un liant soluble dans l'eau constitué d'un mélange d'alcool gras éthoxylé et de polyéthylène-glycol, et une résine filmogène compatible à l'eau, dans lequel ledit agent dispersant est un agent effervescent produisant son effet effervescent au contact de l'eau, et dans lequel ladite résine est présente en quantité appropriée, comprise entre 1 et 60 % en poids du poids de grains de poudre, pour assurer en elle-même, lors du séchage après application de ladite peinture liquide sur un support, la formation d'un film durcissant au fur et à mesure de l'évaporation de l'eau par séchage à l'air libre à température comprise entre 1 et 40°C.

2. Constituant de peinture pulvérulent selon la revendication 1, **caractérisé en ce que** lesdits pigments sont présents dans lesdits grains de poudre dans une concentration comprise entre 0,5 et 25 % en poids, de préférence comprise entre 7 et 15 % en poids, du poids total de grains de poudre.

3. Constituant de peinture pulvérulent selon la revendication 1 ou 2, **caractérisé en ce que** ledit agent effervescent est un mélange de carbonate de soude et d'acide citrique.

4. Constituant de peinture pulvérulent selon l'une quelconque des revendications 1 à 3, **caractérisé en ce que** ledit agent effervescent y est présent dans une concentration comprise entre 2 et 20 % en poids, de préférence comprise entre 8 et 15 % en poids, du poids total des grains de poudre.

5. Constituant de peinture pulvérulent selon l'une quelconque des revendications 1 à 4, **caractérisé en ce que** dans ledit liant, l'alcool gras éthoxylé, est un éther alkylé de polyéthylène-glycol d'alcool gras, présent dans une proportion d'environ 50 % en poids par rapport au poids total dudit liant.

6. Constituant de peinture pulvérulent selon l'une quelconque des revendications 1 à 5, **caractérisé en ce que** ledit liant est présent dans une proportion comprise entre 5 et 30 % en poids, de préférence comprise entre 5 et 10 % en poids, du poids total de grains de poudre.

7. Constituant de peinture pulvérulent selon l'une quelconque des revendications 1 à 6, **caractérisé en ce que** les grains de poudre présentent une granulométrie moyenne supérieure à 10 micromètres, de préférence comprise entre 100 et 800 micromètres.

8. Constituant de peinture pulvérulent selon l'une quelconque des revendications 1 à 7, **caractérisé en ce qu'**il comporte en outre des charges et des additifs, notamment des liants hydrauliques, des durcisseurs, des épaississants, des catalyseurs, et/ou des agents antimousses.

9. Constituant de peinture pulvérulent selon l'une quelconque des revendications 1 à 8, **caractérisée en ce que** lesdits pigments avec ledit agent effervescent et ladite résine filmogène sont présents dans les mêmes grains de poudre, pour avoir été enrobés en mélange dans ledit liant par granulation à l'état fondu à une température supérieure à la température de fusion dudit liant, celle-ci étant de préférence inférieure à 120 °C.

10. Procédé de préparation d'une peinture liquide s'appliquant au pinceau et ayant l'eau comme solvant, **caractérisé en ce qu'**on incorpore du constituant de peinture pulvérulent défini à l'une quelconque des revendications 1 à 9 dans une quantité d'eau déterminée pour assurer la dissolution de 1 à 2 parts desdits grains de poudre dans 1 à 2 parts d'eau, de préférence de 50 g desdits grains de poudre dans 50 ml d'eau.

11. Utilisation du constituant de peinture pulvérulent défini à l'une quelconque des revendications 1 à 9, selon laquelle :
- on incorpore une quantité dudit constituant de peinture pulvérulent dans une quantité d'eau déterminée pour assurer la dissolution de 1 à 2 parts desdits grains de poudre dans 1 à 2 parts d'eau,
- on applique la peinture liquide ainsi obtenue par dissolution des grains de poudre dans l'eau sur un support à peindre, notamment au moyen d'un pinceau,
- et on laisse sécher le film de peinture ainsi déposé sur ledit support à l'air libre à la température ambiante pour assurer ainsi son durcissement par évaporation d'eau.

## Patentansprüche

1. Pulverförmige Lackkomponente, die sich im Wasser auflöst, zum Erhalten eines verbrauchsfertigen Flüssiglacks, gebildet aus Pulverkörnern, die eingebettete Pigmente in Mischung mit einem Dispergiermittel in einem wasserlöslichen Bindemittel, das aus einer Mischung aus ethoxyliertem Fettalkohol und Polyethylenglykol besteht, und einem filmbildenden wasserverträglichen Harz umfassen, wobei das Dispergiermittel ein Schaummittel ist, das seine schäumende Wirkung bei Kontakt mit Wasser erzeugt, und wobei das Harz in geeigneter Menge, zwischen 1 und 60 Gew.-% des Pulverkörnergewichts vorliegt, um selbst, bei der Trocknung nach Aufbringen des Flüssiglacks auf einen Träger, das Bilden eines Films sicherzustellen, der schrittweise mit Verdunstung des Wassers mittels Lufttrocknung bei Temperatur zwischen 1 und 40 °C aushärtet.

2. Pulverförmige Lackkomponente nach Anspruch 1, **dadurch gekennzeichnet, dass** die Pigmente in den Pulverkörnern in einer Konzentration zwischen 0,5 und 25 Gew.-%, vorzugsweise zwischen 7 und 15 Gew.-%, des Gesamtgewichts der Pulverkörner vorliegen.

3. Pulverförmige Lackkomponente nach Anspruch 1 oder 2, **dadurch gekennzeichnet, dass** das Schaummittel eine Mischung aus Natriumcarbonat und Zitronensäure ist.

4. Pulverförmige Lackkomponente nach einem der Ansprüche 1 bis 3, **dadurch gekennzeichnet, dass** das Schaummittel darin in einer Konzentration zwischen 2 und 20 Gew.-%, vorzugsweise zwischen 8 und 15 Gew.-%, des Gesamtgewichts der Pulverkörner vorliegt.

5. Pulverförmige Lackkomponente nach einem der Ansprüche 1 bis 4, **dadurch gekennzeichnet, dass** in dem Bindemittel der ethoxylierte Fettalkohol ein Fettalkoholpolyethylenglykolalkylether ist, der in einem Anteil von etwa 50 Gew.-% in Bezug auf das Gesamtgewicht des Bindemittels vorliegt.

6. Pulverförmige Lackkomponente nach einem der Ansprüche 1 bis 5, **dadurch gekennzeichnet, dass** das Bindemittel in einem Anteil zwischen 5 und 30 Gew.-%, vorzugsweise zwischen 5 und 10 Gew.-%, des Gesamtgewichts der Pulverkörner vorliegt.

7. Pulverförmige Lackkomponente nach einem der Ansprüche 1 bis 6, **dadurch gekennzeichnet, dass** die Pulverkörner eine mittlere Partikelgröße über 10 µm, vorzugsweise zwischen 100 und 800 Mikrometer aufweisen.

8. Pulverförmige Lackkomponente nach einem der Ansprüche 1 bis 7, **dadurch gekennzeichnet, dass** sie überdies Füller und Zusätze umfasst, insbesondere hydraulische Bindemittel, Härter, Verdicker, Katalysatoren und/oder Antischaummittel.

9. Pulverförmige Lackkomponente nach einem der Ansprüche 1 bis 8, **dadurch gekennzeichnet, dass** die Pigmente mit dem Schaummittel und dem filmbildenden Harz in denselben Pulverkörnern vorliegen, um mittels Granulierung in geschmolzenem Zustand bei einer höheren Temperatur als der Schmelztemperatur des Bindemittels, die vorzugsweise unter 120 °C liegt, in Mischung in dem Bindemittel eingebettet worden zu sein.

10. Verfahren zum Herstellen eines Flüssiglacks, der mit dem Pinsel aufgebracht wird und Wasser als Lösemittel aufweist, **dadurch gekennzeichnet, dass** pulverförmige Lackkomponente, die in einem der Ansprüche 1 bis 9 definiert wurde, in eine Menge Wasser eingebracht wird, die derart bestimmt wird, dass das Auflösen von 1 bis 2 Teilen der Pulverkörner in 1 bis 2 Teilen Wasser, vorzugsweise 50 g der Körner in 50 ml Wasser, sichergestellt ist.

11. Verwendung der pulverförmigen Lackkomponente, die in einem der Ansprüche 1 bis 9 definiert wurde, wobei:
- eine Menge der pulverförmigen Lackkomponente in eine Menge Wasser eingebracht wird, die derart bestimmt wird, dass das Auflösen von 1 bis 2 Teilen der Pulverkörner in 1 bis 2 Teilen Wasser sichergestellt ist,
- der so, mittels Auflösen der Pulverkörner in dem Wasser, erhaltene Flüssiglack auf einem zu lackierenden Träger aufgebracht wird, insbesondere mittels eines Pinsels,
- und wobei der so auf dem Träger aufgetragene Lackfilm bei Umgebungstemperatur an der Luft trocknen gelassen wird, um so seine Aushärtung mittels Wasserverdunstung sicherzustellen.

## Claims

1. A pulverulent painting component to be dissolved in water to obtain a liquid painting ready for use, made of powder grains containing coated pigments in a mixture with a dispersing agent in a water soluble binder made up of a mixture of an ethoxylated fatty alcohol and a polyethylene glycol, and a film forming resin compatible with water, in which said dispersing agent is an effervescent agent having its effervescent effect when contacted with water, and in which said resin is present in an appropriate quantity, ranging between 1 and 60 weight % of the powder grains weight, to provide in itself, during the drying after application of said liquid painting on a support, the formation of a film progressively hardening with the water evaporation by free air drying at a temperature ranging between 1 and 40°C.

2. The pulverulent painting component according to claim 1, **characterized in that** said pigments are present into said powder grains in a concentration ranging between 0.5 and 25 weight %, preferably ranging between 7 and 15 weight % of the total powder grains weight.

3. The pulverulent painting component according to claim 1 or 2, **characterized in that** said effervescent agent is a mixture of soda carbonate and citric acid.

4. The pulverulent painting component according to any of claims 1 to 3, **characterized in that** said effervescent agent is present therein at a concentration ranging between 2 and 20 weight %, preferably ranging between 8 and 15 weight % of the total powder grains weight.

5. The pulverulent painting component according to any of claims 1 to 4, **characterized in that** within said binder, the ethoxylated fatty alcohol is an alkylated ether of polyethylene glycol fatty alcohol, present in a proportion of approximately 50 weight % relative to the total weight of said binder.

6. The pulverulent painting component according to any of claims 1 to 5, **characterized in that** said binder is present in a proportion ranging between 5 and 30 weight %, preferably ranging between 5 and 10 weight %, of the powder grains total weight.

7. The pulverulent painting component according to any of claims 1 to 6, **characterized in that** the powder grains present an average granulometry higher than 10 micrometers, preferably ranging between 100 and 800 micrometers.

8. The pulverulent painting component according to any of claims 1 to 7, **characterized in that** it further comprises fillers and additives, in particular hydraulic binders, hardeners, thickeners, catalysts and/or antifoaming agents.

9. The pulverulent painting component according to any of claims 1 to 8, **characterized in that** said pigments with said effervescent agent and said film forming resin are present within the same powder grains, for having being coated in a mixture into said binder by granulation in the melted state at a temperature higher than the melting point of said binder, this one being preferably lower than 120 °C.

10. A method for preparing a liquid painting being applied with a brush and having water as solvent, **characterized in that** a pulverulent painting component according to any of claims 1 to 9 is incorporated into a determined water quantity to ensure the dissolution of 1 to 2 parts of said powder grains in 1 to 2 water parts, preferably of 50 g of said powder grains into 50 ml of water.

11. Use of the pulverulent painting component according to any of claims of claims 1 to 9, in which:
a quantity of said painting powder component is incorporated in a determined water quantity to ensure the dissolution from 1 to 2 parts of said powder grains into 1 to 2 water parts,
the liquid painting thus obtained by dissolution of the powder grains in water is applied on a support to be painted, in particular, by means of a brush,
and the painting film thus deposited on said support is dried in free air at the ambient temperature to thus ensure his hardening by water evaporation.
